# EUROPÄISCHE PATENTSCHRIFT

(11) **EP 1 512 819 B1**
(45) Veröffentlichungstag und Bekanntmachung des Hinweises auf die Patenterteilung: **08.01.2014**
(21) Anmeldenummer: 04104050.2
(22) Anmeldetag: 23.08.2004
(51) Int. Cl.: B62D 25/10, E05C 17/34, E05F 1/10, E05F 1/12

(54) **Vorrichtung zum Befestigen einer Haube an einem Fahrzeug**
Device for the fixing of a lid to a vehicle
Dispositif de fixation d'un capot de véhicule

(30) Priorität: 27.08.2003 US 649568
(43) Veröffentlichungstag der Anmeldung: 09.03.2005
(73) Patentinhaber: DEERE & COMPANY, Moline, Illinois 61265-8098 (US)
(72) Erfinder: Boden, Shane Michael, 50677, Waverly, IA (US)
(74) Vertreter: Holst, Sönke

(56) Entgegenhaltungen:
- WO-A-02/22431
- DE-A1- 10 229 766
- GB-A- 673 313

## Beschreibung

Die Erfindung betrifft eine Vorrichtung zum Befestigen einer Haube an einem Fahrzeug, welche einen Motor des Fahrzeugs und andere Komponenten des Fahrzeugs abdeckt. Vorzugsweise handelt es sich bei dem Fahrzeug um ein landwirtschaftliches oder industrielles Nutzfahrzeug. Das hintere Ende einer Haube eines landwirtschaftlichen Nutzfahrzeugs, insbesondere eines Traktors, unterliegt Zwängen in der räumlichen Ausgestaltung, es muss nämlich zur Gewährleistung einer ausreichenden Sicht eine geringe Breite aufweisen.

Aus dem Stand der Technik ist der Einsatz von Gasfedern zum Tragen bzw. Unterstützen einer Fahrzeughaube/Motorhaube bekannt. Solche Fahrzeughauben sind lang und schwer und erfordern eine erhebliche Kraft, um die Haube in einer geöffneten Position zu halten bzw. zu balancieren. Gasfedern ermöglichen eine kompakte Bauweise im Inneren der Haube, sie neigen jedoch dazu, zu versagen, wenn ihre Gasladung sich abnutzt oder verloren geht. Weiterhin ist ihre Federkraft abhängig von der Variation der Umgebungstemperatur. Schließlich liefert die Verwendung von Gasfedern auf jeder Seite der Haube keine ausreichende Steifigkeit gegen Torsion, welche auf die Haube durch Wind oder von einer seitwärtsgerichteten Kraft vom Schließen der Haube hervorgerufen wird, wenn der Bediener neben der Haube steht. Andere aus dem Stand der Technik bekannte Trägervorrichtungen für Hauben erfordern des Weiteren eine Einrastvorrichtung oder eine separate Gabelstütze, um eine Haube in einer angehobenen oder geöffneten Position zu halten.

Die WO 02/22431 zeigt eine Stützvorrichtung für eine Motorhaube mit einem ersten Armpaar und einem zweiten Armpaar, die über ein Gelenk gegeneinander schwenkbar verbunden sind. Das erste Armpaar ist schwenkbar an dem Motor befestigt. Das zweite Armpaar ist schwenkbar mit einem Stab verbunden, wobei der Stab mit seinem einem Ende mit dem Motor und mit seinem anderen Ende mit der Motorhaube verbunden ist. Beide Armpaare sind im Bereich des Gelenks durch eine Drehfeder zur Einnahme einer gespreizten Stellung beaufschlagt. Hierdurch wird über den Stab eine Öffnungsbewegung auf die Motorhaube übertragen. Beide Armpaare haben im Bereich ihrer gelenkigen Verbindung zur Aufnahme der Drehfeder eine maximale laterale Breite, die zu den jeweiligen Enden eines Armpaares hin abnimmt.

Die DE 102 29 766 A1 zeigt eine Stützvorrichtung für eine Motorhaube, an der in einem zentralen unteren Bereich eine Halterung befestigt ist. Ein Arm ist einerseits schwenkbar an der Halterung gehalten und andererseits schwenkbar an einem mit dem Motor verbundenen Stützträger gehalten. Zwischen der Halterung und dem Arm ist ein Federgestängeaufbau angeordnet, der zwei mittels einer Schraubenfeder gegeneinander vorgespannte Gestängepaare, bestehend aus ersten Armen und zweiten Armen, umfasst. Das erste Ende des ersten Armes ist schwenkbar an dem Arm angeordnet. Die Schraubenfeder beaufschlagt mittelbar den Arm, so dass hierüber die Motorhaube angehoben wird. Ferner ist ein Teleskopdämpfer vorgesehen, der zwischen der Halterung und dem Arm angeordnet ist.

Die der Erfindung zugrunde liegende Aufgabe wird darin gesehen, eine Vorrichtung zum Tragen einer Haube anzugeben und weiterzubilden, welche eine Verwendung von Gasfedern vermeidet, welche insbesondere keine Einrastvorrichtung oder keine separate Gabelstütze erfordert.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Die erfindungsgemäße Vorrichtung ist zum Befestigen, Tragen und/oder Bewegen einer Haube relativ zu einem Fahrzeug geeignet, wobei die Haube drehbar an dem Fahrzeug anbringbar ist. Die Vorrichtung umfasst zwei - vorzugsweise in lateraler Richtung - voneinander beabstandet angeordnete erste Arme, zwei - vorzugsweise in lateraler Richtung - voneinander beabstandet angeordnete zweite Arme und eine elastische und/oder federnde Einrichtung. Ein erster Arm weist ein erstes Ende und ein zweites Ende auf. Das erste Ende des ersten Arms ist drehbar/schwenkbar an dem Fahrzeug angeordnet. Ein zweiter Arm weist ein erstes Ende auf, welches drehbar an einem zweiten Ende eines ersten Arms angeordnet ist. Ein zweiter Arm weist ein zweites Ende zum Verbinden mit der Haube und zum Unterstützen der Haube auf. Die elastische/federnde Einrichtung ist zwischen den ersten und zweiten Armen angeordnet und gespannt, um die zweiten Enden der zweiten Arme nach oben und zu der Haube hin zu drängen, wobei der laterale Abstand zwischen den ersten Enden der ersten Arme größer als der laterale Abstand zwischen den zweiten Enden der ersten Arme und der ersten Enden der zweiten Arme. Hierdurch ist die Torsionssteifigkeit der Haube und der Bauraum unter der Haube erhöhbar.

Bevorzugt koppelt ein Drehbolzen einen zweiten Arm an einen ersten Arm. Die elastische und/oder federnde Einrichtung ist um den Drehbolzen herum angeordnet bzw. gewunden.

In einer bevorzugten Ausführungsform ist der Drehbolzen drehfest an mindestens einem der zweiten Arme befestigt. Die elastische und/oder federnde Einrichtung weist ein inneres Ende auf, welches an dem Drehbolzen befestigt ist. Die elastische und/oder federnde Einrichtung weist ein äußeres Ende auf, welches an mindestens einem ersten Arm drehfest befestigt ist.

Im Konkreten könnte die elastische und/oder federnde Einrichtung eine Torsionsfeder oder eine Drehfeder aufweisen.

Der laterale Abstand zwischen den zweiten Enden der zweiten Arme könnte größer als der laterale Abstand zwischen den zweiten Enden der ersten Arme und den ersten Enden der zweiten Arme sein. Auch hierdurch ist die Torsionssteifigkeit der Haube und der Bauraum unter der Haube erhöhbar.

Bevorzugte ist mittels einer Strebe der laterale Abstand zwischen den ersten Armen aufrechterhaltbar, wobei die Strebe zwischen den ersten Armen befestigbar ist. So könnte ebenfalls mittels einer Strebe der laterale Abstand zwischen den zweiten Armen aufrechterhaltbar sein, wobei die Strebe zwischen den zweiten Armen zu befestigen wäre.

In einer besonders bevorzugten Ausführungsform ist ein Gelenkträger vorgesehen, an welchem die Haube drehbar anordenbar ist und/oder an welchem die ersten Arme drehbar anordenbar sind. Der Gelenkträger könnte an einem Rahmen des Fahrzeugs befestigbar sein.

Ganz besonders bevorzugt ist die Haube an einer Haubenträgerstruktur montierbar, wobei die Haubenträgerstruktur an einer ersten Stelle an dem Gelenkträger drehbar anordenbar ist. Die Haubenträgerstruktur ist an einer zweiten Stelle an den zweiten Armen befestigbar.

Die erfindungsgemäße Vorrichtung zum Befestigen einer Haube dient ganz Allgemein zur Unterstützung der Haube in der angehobenen bzw. geöffneten Position relativ zu dem Fahrzeug, an welchem die Haube drehbar gekoppelt ist. Die Vorrichtung umfasst zwei Paare von Armteilen, welche über einen Drehbolzen drehbar aneinander gekoppelt sind und welche zwischen dem Fahrzeug und der Fahrzeughaube angeordnet sind. Eine flache gewundene Feder bzw. Torsionsfeder ist um den Drehbolzen gewunden und ist an den Armteilen befestigt. Die Feder ist derart vorgespannt, dass ein Paar von Armen gedreht wird und hierdurch die Haube nach oben gedrängt wird.

Zusammenfassend sei noch einmal hervorgehoben, dass die erfindungsgemäße Vorrichtung zum Befestigen einer Haube eine Verwendung von Gasfedern vermeidet. Sie hat in ganz besonders vorteilhafter Weise eine lange Lebensdauer und es ist kein Einrastmechanismus oder keine separate Gabelstütze erforderlich, um die Haube in ihrer geöffneten Position zu halten. Die erfindungsgemäße Vorrichtung nimmt insbesondere im geschlossenen Zustand der Haube wenig Platz in Anspruch, so dass in besonders vorteilhafter Weise der von der Haube verdeckte Raum optimal genutzt werden kann, beispielsweise für Hydraulikleitungen und andere Bauteile bzw. Komponenten des Fahrzeugs. Auch weist die erfindungsgemäße Vorrichtung eine ganz besonders hohe Torsionssteifigkeit auf, wodurch in vorteilhafter Weise eine Beschädigung der Haube oder der von der Haube abzudeckenden Fahrzeugkomponenten beim Schließen der Haube weitgehend vermieden werden kann.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt jeweils in einer schematischen Darstellung:
- Fig. 1: eine perspektivische Explosionsansicht eines erfindungsgemäßen Ausführungsbeispiels einer Vorrichtung zum Tragen einer Motorhaube,
- Fig. 2: eine perspektivische Ansicht einer Haubenanordnung eines Fahrzeugs, von welcher ein Teil ausgeschnitten ist, in welcher eine erfindungsgemäße Vorrichtung zum Tragen einer Motorhaube eingebaut ist,
- Fig. 3: eine perspektivische Ansicht der erfindungsgemäßen Vorrichtung zum Tragen einer Haube in einer angehobenen Position und
- Fig. 4: eine perspektivische Ansicht der erfindungsgemäßen Vorrichtung zum Tragen einer Haube in einer abgesenkten Position.

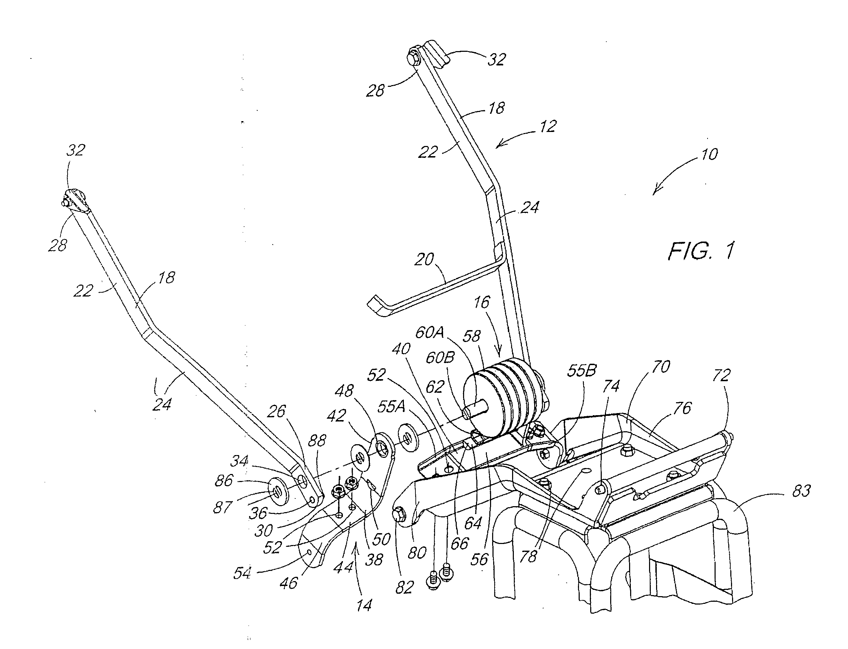

Unter Bezugnahme auf die Figuren und insbesondere auf Fig. 1, ist ein Ausführungsbeispiel einer erfindungsgemäßen Vorrichtung zum Tragen einer Motorhaube mit dem Bezugszeichen 10 gekennzeichnet. Die Vorrichtung 10 umfasst eine Haubenarmeinrichtung 12, eine Federarmeinrichtung 14 und eine Federeinrichtung 16. Die Haubenarmeinrichtung 12 umfasst zwei Haubenarme 18, welche durch eine Strebe 20 zusammengefügt sind. Jeder Haubenarm 18 umfasst einen ersten Abschnitt 22, einen zweiten Abschnitt 24, welcher zum ersten Abschnitt 22 unter einem Winkel angeordnet ist, und einen dritten Abschnitt 26, welcher zu dem zweiten Abschnitt 24 unter einem Winkel angeordnet ist. Der erste Abschnitt 22 und der dritte Abschnitt 26 sind im Wesentlichen parallel zueinander angeordnet. Die Strebe 20 ist an dem zweiten Abschnitt 24 der Haubenarme 18 geschweißt oder in einer anderen Art befestigt und hält die Haubenarme 18 derart voneinander beabstandet, dass die ersten Abschnitte 22 und die dritten Abschnitte 26 jeweils zueinander parallel angeordnet sind. Aufgrund der vorgesehenen Winkel zwischen den einzelnen Abschnitten 22, 24 und 26 der Haubenarme 18 ist der Abstand zwischen den Enden 28 der Haubenarme 18 im Wesentlichen größer als der Abstand zwischen den ersten Enden 26 der Haubenarme 18. Flansche 32 zum Befestigen der Haube sind drehbar an den Enden 28 der Haubenarmen 18 angeordnet, so dass die Haubenarme 18 einfach an der Haube eines Fahrzeugs befestigt werden können. Die ersten Enden 26 der Haubenarme 18 umfassen des Weiteren jeweils eine erste Bohrung bzw. Apertur 34 und eine zweite Bohrung bzw. Apertur 36.

Die Federarmeinrichtung 14 umfasst zwei Federarme 38 und eine Strebe 40. Jeder Federarm 38 ist im Wesentlichen durch einen ersten Abschnitt 42, einen zweiten Abschnitt 44, welcher unter einem Winkel zu dem ersten Abschnitt 42 angeordnet ist, und durch einen dritten Abschnitt 46 charakterisiert, welcher unter einem Winkel zu dem zweiten Abschnitt 44 angeordnet ist. Der erste Abschnitt 42 umfasst eine Bohrung bzw. Federapertur 48 und eine halbkreisförmige Apertur 50. Der zweite Abschnitt 44 umfasst zwei Aperturen 52 zum Befestigen der Strebe 40. Der dritte Abschnitt 46 umfasst eine Apertur 54 zum Befestigen eines Arms. Die Strebe 40 umfasst Endabschnitte 55A und 55B und einen mittleren Abschnitt 56. Die Endabschnitte 55A und 55B der Strebe 40 umfassen jeweils Aperturen 52, welche zu den Aperturen 52 der Federarme 38 korrespondieren. Die Endabschnitte 55A und 55B der Strebe 40 sind unter einem Winkel relativ zum mittleren Abschnitt 56 derart angeordnet, dass, falls Federarme 38 an der Strebe 40 befestigt sind, die Federarme 38 voneinander beabstandet in einer Position gehalten werden, in welcher der erste Abschnitt 42 und der dritte Abschnitt 46 eines Federarms 38 im Wesentlichen parallel zu dem ersten Abschnitt 42 und dem dritten Abschnitt 46 des anderen Federarms 38 angeordnet sind. Im montierten Zustand der Federarme 38 an der Strebe 40 ist der Abstand zwischen den dritten Abschnitten 46 größer als der Abstand zwischen den ersten Abschnitten 42 der Federarme 38.

Die Federeinrichtung 16 umfasst ein oder mehrere elastische Elemente bzw. Federelemente 58, welche vorzugsweise in Form einer gewundenen Torsionsfeder bzw. Drehfeder ausgebildet ist bzw. sind. Jede Torsionsfeder 58 umfasst ein erstes, nicht gezeigtes Ende, welches zwischen zwei Bolzen 60A und 60B mit einem halbkreisförmigen Querschnitt aufgenommen ist. Die zwei Bolzen 60A und 60B mit dem halbkreisförmigen Querschnitt bilden zusammen einen mittleren Drehbolzen 60. Jede Torsionsfeder 58 ist um den mittleren Drehbolzen 60 in einer übereinandergerollten Weise gewunden und umfasst ein zweites Ende, welches ein zapfen- oder hakenförmiges Ende 62 bildet. Das Ende 62 ist derart ausgebildet, dass es an dem flachen Oberflächenabschnitt 66 des einen halbkreisförmigen Querschnitt aufweisenden Bolzens 64 zur Anlage bzw. zum Anstoß kommt.

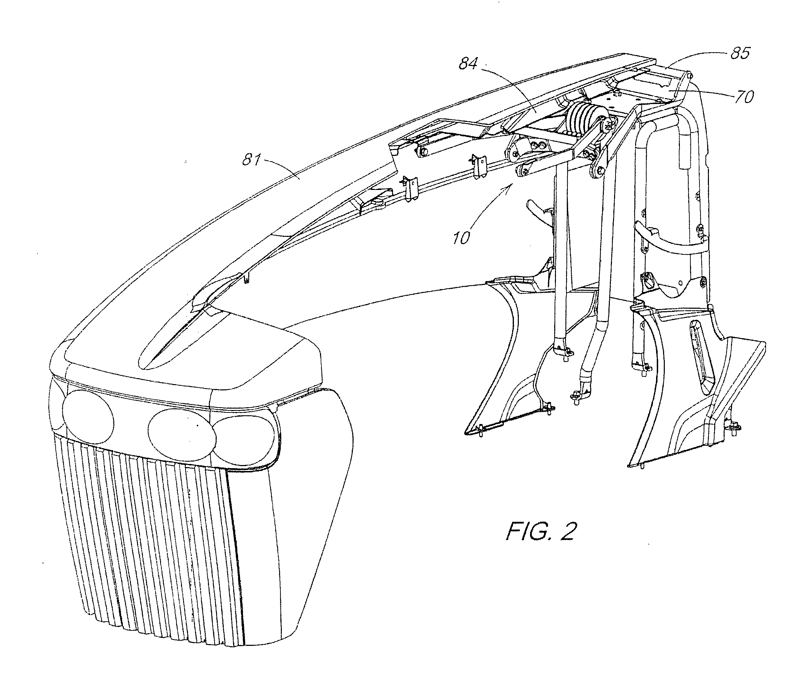

Zu den bisher beschriebenen Einrichtungen bzw. Baugruppen umfasst die Vorrichtung 10 des Weiteren einen Gelenkträger 70, welcher als Dreh- bzw. Schwenkpunkt für die Haube 81 dient, an welchem die Federarmeinrichtung 14 anbringbar ist. Der Gelenkträger 70 dient als ein Mittel zum Befestigen bzw. Sichern der gesamten Einrichtung an einem Rahmen des Fahrzeugs. Der Gelenkträger 70 umfasst einen oberen Endabschnitt 72, der zwei Drehgelenkaperturen 74 und einen mittleren Abschnitt 76 aufweist. Der Gelenkträger 70 weist eine Vielzahl von Aperturen 78 zum Befestigen des Gelenkträgers 70 an dem Rahmen des Fahrzeugs auf. Der Gelenkträger 70 umfasst des Weiteren einen unteren Endabschnitt 80, der zwei Aperturen 82 zum Anbringen der Federarme 38 aufweist. Der Gelenkträger 70 ist an einem Trägerabschnitt 83 des Fahrzeugrahmens mittels der Aperturen 78 gesichert, wobei geeignete Bolzen oder entsprechende Verbindungsmittel verwendet werden. Fig. 2 ist entnehmbar, dass die Haube 81 an dem Gelenkträger 70 über eine Haubenträgerstruktur 84 montiert ist, welche mit ihrem einen Ende an der Drehgelenkapertur 74 über einen entsprechenden Drehstab 85 drehbar gesichert ist.

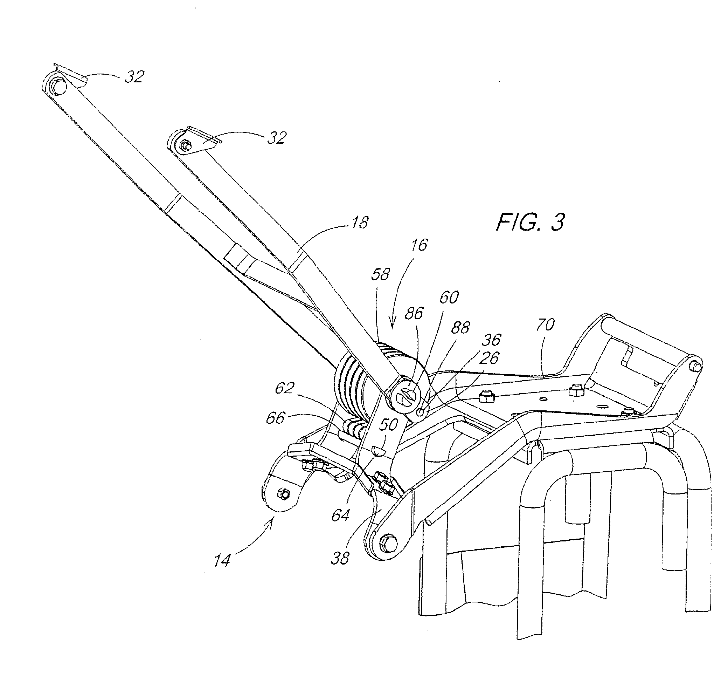

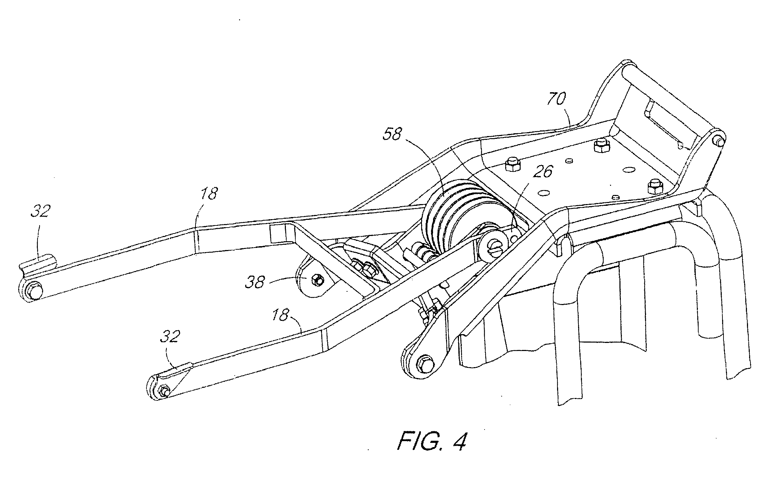

Im Folgenden wird auf die Fig. 3 und 4 Bezug genommen. Die Federarme 38 sind drehbar an den Aperturen 82 des Gelenkträgers 70 mittels geeigneter Bolzen oder entsprechender Verbindungsmittel angebracht. Die Federeinheit 16 ist zwischen den Federarmen 38 derart angebracht, dass die Enden des geteilten Drehbolzens 60 in den Federaperturen 48 gelagert sind. Es könnten Lager in den Aperturen 48 vorgesehen sein, welche eine freie Drehung bzw. Rotation des geteilten Drehbolzens 60 relativ zu den Federarmen 38 ermöglichen. In gleicher Weise wird der Bolzen 64 mit dem halbkreisförmigen Querschnitt in den halbkreisförmigen Aperturen 50 der Federarme 38 fixiert. Das zapfenförmige Ende 62 der Federeinrichtung bzw. der Torsionsfeder 58 stößt an der flachen Oberfläche 66 des Bolzens 64 an bzw. kommt daran zur Anlage. Somit ist die Torsionsfeder 58 unabhängig von dem geteilten Drehbolzen 60 gegen Rotation bzw. Drehung fixiert. Dementsprechend bewirkt eine Drehung des Drehbolzens 60, der das erste Ende der Torsionsfeder 58 aufnimmt, dass die Torsionsfeder 58 in Abhängigkeit der Richtung der Drehung bzw. Rotation gewunden oder entwunden wird. Es bewegt keine Drehung bzw. Rotation der gesamten Torsionsfeder 58, da der Bolzen 64 einen Stopp oder Anschlag für die Torsionsfeder 58 darstellt. Die Federarmeinrichtung 14 und die Federeinrichtung 16 werden von den lateral beabstandet angeordneten dritten Abschnitten 26 der Haubenarme 18 gehalten, da der geteilte Drehbolzen 60 sich durch die ersten Aperturen 34 erstreckt, welche jeweils an dem zweiten Ende 30 der Haubenarme 18 vorgesehen sind. Es ist mindestens eine Unterlegscheibe 86 für jeden Haubenarm 18 vorgesehen, welche zwei halbkreisförmige Aperturen 87 aufweist. Die halbkreisförmigen Aperturen 87 der Unterlegscheiben 86 sind derart bemessen, dass sie die Bolzen 60A und 60B mit dem halbkreisförmigen Querschnitt - die den geteilten Drehbolzen 60 bilden - komplementär aufnehmen. Vorzugsweise werden die Unterlegscheiben 86 an den Haubenarmen 18 an den ersten Aperturen 34 angeschweißt oder in einer anderen Art derart fixiert, dass der geteilte Drehbolzen 60 gegen eine Drehung bzw. Rotation relativ zu den Haubenarmen 18 fixiert oder gesichert ist. Dementsprechend können die Haubenarme 18 lediglich den geteilten Drehbolzen 60 drehen bzw. rotieren und umgekehrt. In Abhängigkeit der Drehrichtung windet oder entwindet somit eine Drehung/Rotation der Haubenarmeinrichtung 12 relativ zu der Federarmeinrichtung 14 notwendigerweise die Torsionsfeder 58.

Wie bereits beschrieben, sind die Haubenarme 18 an der Haubenträgerstruktur 84 mittels den Befestigungsflanschen 32 angebracht, welche relativ zu den Haubenarmen 18 drehen. Dementsprechend ist die Haubenträgerstruktur 84 indirekt über die Haubenarme 18 und direkt über den Gelenkträger 70 an dem Fahrzeug befestigt. Somit dreht die Haube 81 an dem Gelenkträger 70 und wird hierbei von der Vorrichtung 10 zum Bewegen der Haube 81 unterstützt, wenn die Haube 81 angehoben bzw. geöffnet wird. Im Konkreten ist die Torsionsfeder 58 derart vorgespannt, dass sie die Federarme 18 nach oben, bezogen auf die Figuren im Uhrzeigersinn und zur der Haubenträgerstruktur 84 hin dreht. Hierbei drehen die Federarme 38 bezogen auf die Figuren entgegengesetzt dem Uhrzeigersinn und nach vorne, wenn die Haube 81 angehoben wird, was dazu führt, die Haubenträgerstruktur 84 anzuheben und die Haubenträgerstruktur 84 in einer angehobenen Position zu halten, wie es in Fig. 3 gezeigt ist. Ein Anschlagbolzen 88 ist in der zweiten Apertur 36 an dem zweiten Ende 30 der Haubenarme 18 vorgesehen, um die relative Drehung zwischen den Haubenarmen 18 und den Federarmen 38 zu begrenzen. Wenn die Haube 81 abgesenkt wird, wird die Vorspannkraft der Torsionsfeder 58 überwunden und die Haubenarme 18 drehen entgegengesetzt dem Uhrzeigersinn in einer Richtung weg von der Haubenträgerstruktur 84. Die Federarme 38 drehen dann im Uhrzeigersinn und nach hinten in die in Fig. 4 gezeigte Position. Die Federkraft der Torsionsfeder 58 variiert geringfügig mit einer Temperaturveränderung und wird derart gewählt, dass sie ausreichend ist, die Haubenträgerstruktur 84 in einer geöffneten bzw. angehobenen Position ohne die Verwendung einer zusätzlichen Gabelstütze oder etwas Vergleichbarem zu halten. Der große Abstand zwischen den ersten Enden 28 der Haubenarme 18 und den dritten Abschnitten 46 der Federarme 38 ermöglichen einen Bauraum für Hydraulikleitungen und andere Bauteile unter der Haube und erhöhen in signifikanter Weise entsprechend die Torsionssteifigkeit der Haube, wenn die Haube geöffnet ist.

Auch wenn die Erfindung anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Vorrichtung zum Tragen und/oder Bewegen einer Haube (81) relativ zu einem Fahrzeug, an welchem die Haube (81) drehbar anbringbar ist, mit zwei in lateraler Richtung voneinander beabstandet angeordneten ersten Armen (14), zwei in lateraler Richtung voneinander beabstandet angeordneten zweiten Armen (18) und einer elastischen und/oder federnden Einrichtung (58), wobei ein genannter erster Arm (14) ein erstes Ende (46) und ein zweites Ende (42) aufweist, wobei das erste Ende (46) des ersten Arms (14) drehbar/schwenkbar an dem Fahrzeug angeordnet ist, wobei ein genannter zweiter Arm (18) ein erstes Ende (26) aufweist, welches drehbar an dem zweiten Ende (42) des ersten Arms (14) angeordnet ist, wobei der zweiter Arm (18) ein zweites Ende (28) zum Verbinden mit der Haube und zum Unterstützen der Haube (81) aufweist, und wobei die elastische/federnde Einrichtung (58) zwischen den ersten und zweiten Armen (14, 18) angeordnet und gespannt ist, um die zweiten Enden (28) der zweiten Arme (18) nach oben und zu der Haube (81) hin zu drängen, **dadurch gekennzeichnet, dass** der laterale Abstand zwischen den ersten Enden (46) der ersten Arme (14) größer als der laterale Abstand zwischen den zweiten Enden (42) der ersten Arme (14) und der ersten Enden (26) der zweiten Arme (18) ist, wobei die Torsionssteifigkeit der Haube (81) und der Bauraum unter der Haube erhöhbar ist.

2. Vorrichtung nach Anspruch 1, wobei ein Drehbolzen (60) den zweiten Arm (18) an den ersten Arm (14) koppelt und wobei die elastische und/oder federnde Einrichtung (58) um den Drehbolzen (60) herum angeordnet bzw. gewunden ist.

3. Vorrichtung nach Anspruch 2, wobei der Drehbolzen (60) drehfest an mindestens einem der zweiten Arme (18) befestigt ist, wobei die elastische und/oder federnde Einrichtung (58) ein inneres Ende aufweist, welches an dem Drehbolzen (60) befestigt ist, und wobei die elastische und/oder federnde Einrichtung (58) ein äußeres Ende (62) aufweist, welches an mindestens einem ersten Arm (14) drehfest befestigt ist.

4. Vorrichtung nach einem der Ansprüche 1 bis 3, wobei die elastische und/oder federnde Einrichtung (58) eine Torsionsfeder oder eine Drehfeder aufweist.

5. Vorrichtung nach einem der vorhergehenden Ansprüche, wobei der laterale Abstand zwischen den zweiten Enden (28) der zweiten Arme (18) größer als der laterale Abstand zwischen den zweiten Enden (42) der ersten Arme (14) und den ersten Enden (26) der zweiten Arme (18) ist, wobei die Torsionssteifigkeit der Haube (81) und der Bauraum unter der Haube erhöhbar ist.

6. Vorrichtung nach einem der vorhergehenden Ansprüche, wobei mittels einer Strebe (40) der laterale Abstand zwischen den ersten Armen (14) aufrechterhaltbar ist und wobei die Strebe (40) zwischen den ersten Armen (14) befestigbar ist.

7. Vorrichtung nach einem der vorhergehenden Ansprüche, wobei mittels einer Strebe (20) der laterale Abstand zwischen den zweiten Armen (18) aufrechterhaltbar ist und wobei die Strebe (20) zwischen den zweiten Armen (18) befestigbar ist.

8. Vorrichtung nach einem der vorhergehenden Ansprüche, wobei ein Gelenkträger (70) vorgesehen ist, an welchem die Haube (81) drehbar anordenbar ist und/oder an welchem die ersten Arme (14) drehbar anordenbar sind, und wobei der Gelenkträger (70) vorzugsweise an einem Rahmen des Fahrzeugs befestigbar ist.

9. Vorrichtung nach einem der vorhergehenden Ansprüche, wobei die Haube (81) an einer Haubenträgerstruktur (84) montierbar ist, wobei die Haubenträgerstruktur (84) an einer ersten Stelle an dem Gelenkträger (70) drehbar anordenbar ist und wobei die Haubenträgerstruktur (84) an einer zweiten Stelle an den zweiten Armen (18) befestigbar ist.

## Claims

1. Device for supporting and/or moving a lid (81) relative to a vehicle to which the lid (81) is rotatably attachable, with two first arms (14) which are arranged spaced apart from each other in the lateral direction, two second arms (18) which are arranged spaced apart from each other in the lateral direction, and an elastic and/or resilient device (58), wherein a first arm (14) referred to has a first end (46) and a second end (42), wherein the first end (46) of the first arm (14) is arranged rotatably/pivotably on the vehicle, wherein a second arm (18) referred to has a first end (26) which is arranged rotatably at the second end (42) of the first arm (14), wherein the second arm (18) has a second end (28) for connecting to the lid and for supporting the lid (81), and wherein the elastic/resilient device (58) is arranged and clamped between the first and second arms (14, 18) in order to push the second ends (28) of the second arms (18) upwards and towards the lid (81), **characterized in that** the lateral distance between the first ends (46) of the first arms (14) is greater than the lateral distance between the second ends (42) of the first arms (14) and the first ends (26) of the second arms (18), wherein the torsional rigidity of the lid (81) and the construction space under the lid is increasable.

2. Device according to Claim 1, wherein a rotary pin (60) couples the second arm (18) to the first arm (14), and wherein the elastic and/or resilient device (58) is arranged or coiled around the rotary pin (60).

3. Device according to Claim 2, wherein the rotary pin (60) is fastened in a rotationally fixed manner to at least one of the second arms (18), wherein the elastic and/or resilient device (58) has an inner end which is fastened to the rotary pin (60), and wherein the elastic and/or resilient device (58) has an outer end (62) which is fastened in a rotationally fixed manner to at least one first arm (14).

4. Device according to one of Claims 1 to 3, wherein the elastic and/or resilient device (58) has a torsion spring or a leg spring.

5. Device according to one of the preceding claims, wherein the lateral distance between the second ends (28) of the second arms (18) is greater than the lateral distance between the second ends (42) of the first arms (14) and the first ends (26) of the second arms (18), wherein the torsional rigidity of the lid (81) and the construction space under the lid is increasable.

6. Device according to one of the preceding claims, wherein the lateral distance between the first arms (14) is maintainable by means of a strut (40), and wherein the strut (40) is fastenable between the first arms (14).

7. Device according to one of the preceding claims, wherein the lateral distance between the second arms (18) is maintainable by means of a strut (20), and wherein the strut (20) is fastenable between the second arms (18).

8. Device according to one of the preceding claims, wherein an articulated support (70) is provided, on which the lid (81) is arrangeable rotatably and/or on which the first arms (14) are arrangeable rotatably, and wherein the articulated support (70) is fastenable preferably to a frame of the vehicle.

9. Device according to one of the preceding claims, wherein the lid (81) is mountable on a lid support structure (84), wherein the lid support structure (84) is arrangeable rotatably on the articulated support (70) at a first location, and wherein the lid support structure (84) is fastenable to the second arms (18) at a second location.

## Revendications

1. Dispositif pour supporter et/ou déplacer un capot (81) par rapport à un véhicule sur lequel le capot (81) peut être monté à rotation, comprenant deux premiers bras (14) disposés de manière espacée l'un de l'autre dans la direction latérale, deux deuxièmes bras (18) disposés de manière espacée l'un de l'autre dans la direction latérale et un dispositif (58) élastique et/ou flexible, un dit premier bras (14) comprenant une première extrémité (46) et une deuxième extrémité (42), la première extrémité (46) du premier bras (14) étant disposée de manière rotative/pivotante sur le véhicule, un dit deuxième bras (18) comprenant une première extrémité (26) qui est disposée de manière rotative sur la deuxième extrémité (42) du premier bras (14), le deuxième bras (18) comprenant une deuxième extrémité (28) pour la liaison avec le capot et pour soutenir le capot (81), et le dispositif (58) élastique/flexible étant disposé et tendu entre les premiers et deuxièmes bras (14, 18), afin de pousser les deuxièmes extrémités (28) des deuxièmes bras (18) vers le haut et en direction du capot (81), **caractérisé en ce que** la distance latérale entre les premières extrémités (46) des premiers bras (14) est supérieure à la distance latérale entre les deuxièmes extrémités (42) des premiers bras (14) et les premières extrémités (26) des deuxièmes bras (18), la rigidité à la torsion du capot (81) et l'espace de construction sous le capot pouvant être augmentés.

2. Dispositif selon la revendication 1, dans lequel un axe d'articulation (60) accouple le deuxième bras (18) au premier bras (14), et dans lequel le dispositif (58) élastique et/ou flexible est disposé ou enroulé autour de l'axe d'articulation (60).

3. Dispositif selon la revendication 2, dans lequel l'axe d'articulation (60) est fixé de manière solidaire en rotation à au moins l'un des deuxièmes bras (18), le dispositif (58) élastique et/ou flexible comprenant une extrémité intérieure qui est fixée à l'axe d'articulation (60), et dans lequel le dispositif (58) élastique et/ou flexible comprend une extrémité extérieure (62) qui est fixée de manière solidaire en rotation à au moins un premier bras (14).

4. Dispositif selon l'une quelconque des revendications 1 à 3, dans lequel le dispositif (58) élastique et/ou flexible est un ressort de torsion ou un ressort de rotation.

5. Dispositif selon l'une quelconque des revendications précédentes, dans lequel la distance latérale entre les deuxièmes extrémités (28) des deuxièmes bras (18) est supérieure à la distance latérale entre les deuxièmes extrémités (42) des premiers bras (14) et les premières extrémités (26) des deuxièmes bras (18), et dans lequel la rigidité à la torsion du capot (81) et l'espace de construction sous le capot peuvent être augmentés.

6. Dispositif selon l'une quelconque des revendications précédentes, dans lequel la distance latérale entre les premiers bras (14) peut être maintenue au moyen d'une entretoise (40), et dans lequel l'entretoise (40) peut être fixée entre les premiers bras (14).

7. Dispositif selon l'une quelconque des revendications précédentes, dans lequel la distance latérale entre les deuxièmes bras (18) peut être maintenue au moyen d'une entretoise (20), et dans lequel l'entretoise (20) peut être fixée entre les deuxièmes bras (18).

8. Dispositif selon l'une quelconque des revendications précédentes, dans lequel un support d'articulation (70) est prévu, sur lequel le capot (81) peut être disposé de manière rotative et/ou sur lequel les premiers bras (14) peuvent être disposés de manière rotative, et dans lequel le support d'articulation (70) peut être fixé de préférence à un châssis du véhicule.

9. Dispositif selon l'une quelconque des revendications précédentes, dans lequel le capot (81) peut être monté sur une structure de support de capot (84), dans lequel la structure de support de capot (84) peut être disposée de manière rotative sur le support d'articulation (70) en un premier point, et dans lequel la structure de support de capot (84) peut être fixée aux deuxièmes bras (18) en un deuxième point.
